Europäisches Patentamt

European Patent Office

Office européen des brevets

(19)

(11) Publication number: **0 121 395**
**B1**

(12) # EUROPEAN PATENT SPECIFICATION

(45) Date of publication of patent specification: **10.08.88**

(51) Int. Cl.⁴: **G 01 N 3/30, G 01 M 7/00**

(21) Application number: **84302053.8**

(22) Date of filing: **27.03.84**

(54) Improvements in or relating to the testing of structures by impact.

(30) Priority: **31.03.83 GB 8309030**

(43) Date of publication of application:
**10.10.84 Bulletin 84/41**

(45) Publication of the grant of the patent:
**10.08.88 Bulletin 88/32**

(84) Designated Contracting States:
**DE FR GB**

(56) References cited:
**EP-A-0 076 864**
**WO-A-82/03686**
**DE-A-2 946 707**
**FR-A-2 239 686**

**MACHINE DESIGN, vol. 47, no. 1, January 1975, page 38, Cleveland, US; "Dynamic tester hammers out structural defects"**

(73) Proprietor: **NATIONAL RESEARCH DEVELOPMENT CORPORATION**
**101 Newington Causeway**
**London SE1 6BU (GB)**

(72) Inventor: **Cawley, Peter**
**17 Saville Road**
**London W4 (GB)**
Inventor: **Adams, Robert David**
**17 Cotham Lawn Road**
**Bristol BS6 6DU (GB)**

(74) Representative: **Stables, Patrick Antony**
**Patent Department National Research Development Corporation 101 Newington Causeway**
**London SE1 6BU (GB)**

## Description

This invention relates to method and apparatus for the testing of structures by impact according to the preamble of claims 1 and 8. When a structure is tapped, the characteristics of the impact are dependent on the local impedance of the structure and on the impactor used. For many years it has been customary to test laminates by tapping them with a coin, and then judging their soundness by ear by listening to the resulting sound emitted by them.

In the relatively recent past, apparatus has become available that is capable of testing in a manner that is in some ways comparable but does not rely upon the senses of the operator. Patent specification DE—A—2946707 describes apparatus for testing the soundness of small components by causing them to fall under gravity onto a metal plate and rebound from it after impact. A microphone is positioned close to the plate so as to receive the sound of the impact and to transmit a corresponding signal to equipment that compares that signal with a standard, and then operates mechanism which either accepts or rejects the rebounding component according to whether the comparison with the standard was close or otherwise. In the essentially acoustical system described in this specification, acceptance or rejection of each component depends upon the input to the microphone. That input represents the vibration not of the metal plate, nor even of the component that has just made impact with the plate, but of an intervening mass of air.

The publication "Machine Design", Volume 47, No. 1, January 95, describes a method of testing the soundness of a structure by hitting it with a hammer. A force transducer is attached to the hammer and an accelerometer to the structure, and the electrical outputs that result from the transducer and accelerometer when the hammer hits the structure are both fed to a spectrum analyser which produces a display including the frequency spectrum generated in the structure itself by the impact. In this system it is notable not only that the spectrum analyser requires two inputs—from the force transducer and from the accelerometer, as just described—but also that the output of the analyser is essentially a spectrum of frequencies generated within the test structure itself.

Patent specification EP—A—0076864 published on 20.4.83 (Art 54(3) EPC), describes a third known form of testing apparatus. Here an electrical signal is generated to represent the reaction force experienced, not within a test structure when it is struck by a hammer or other striker, but only within the striker itself. In some of the proposals included in this specification, that electrical signal is reprocessed to give an output representing an aspect of the frequency content of the signal, and that output is then matched against a comparable reference. However, in such proposals in which the testing of the structure relies on frequency analysis, the test is based on the difference in the reductions, for test and reference specimens, between the strongest frequency in a signal and the strength of a particular single frequency present in that signal.

The testing of a structure according to the present invention differs from the testing of a component as taught in specification DE—A—2946707 in that it is based directly upon the vibration of a solid body that has made impact with another, rather than indirectly and thus more remotely upon the vibration of a mass of air adjacent the impacting bodies. It differs from the method of testing taught, as described, in "Machine Design" in that it is based on an analysis of the frequencies of the vibrations set up only in a striker when it makes impact with a test structure. Testing according to the present invention is thus potentially simpler than the system taught in this prior publication, in that the vibration set up within the test structure itself does not have to. be sensed nor made use of in any way. Thirdly, testing according to the present invention differs from what is taught anywhere in patent specification EP—A—0076864 in that it requires the comparison, not of point values of frequency, but of spectra representative of finite and continuous frequency functions, thus avoiding reliability problems which may be inherent in methods of comparison based on single frequency values.

The invention is defined by the claims 1 and 8, embodiments whereof are disclosed in the dependent claims 2—7 and 9. The contents of which claims 1—9 is to be read as part of the disclosure of this specification, and the invention will now be described, by way of example, with reference to the accompanying drawings in which:—

Figures 1 to 3 are graphs;

Figures 4 is a diagrammatic section through an impactor associated with a force transducer, and

Figure 5 is a circuit diagram.

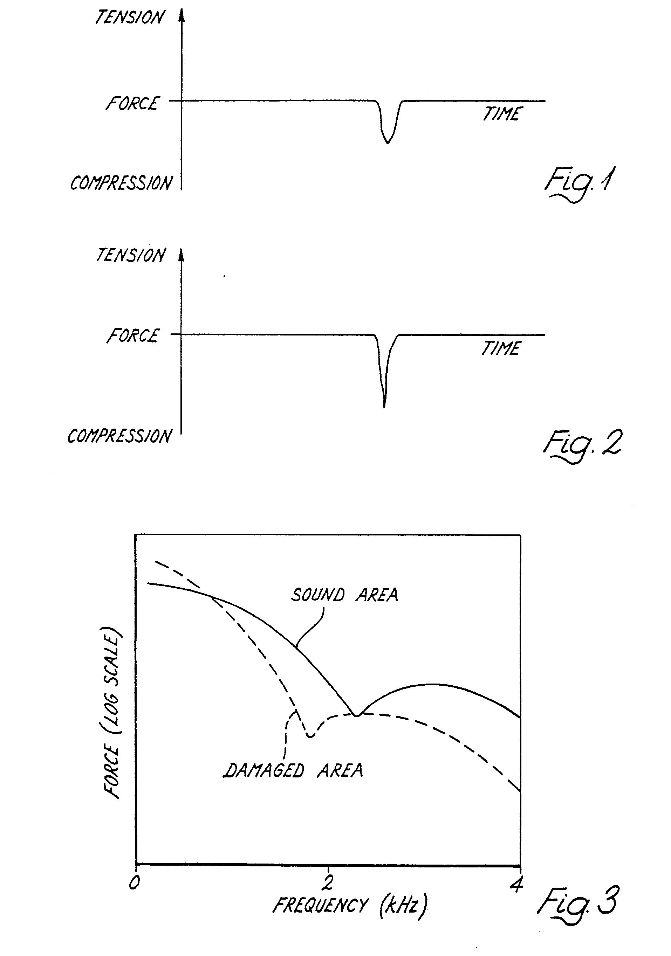

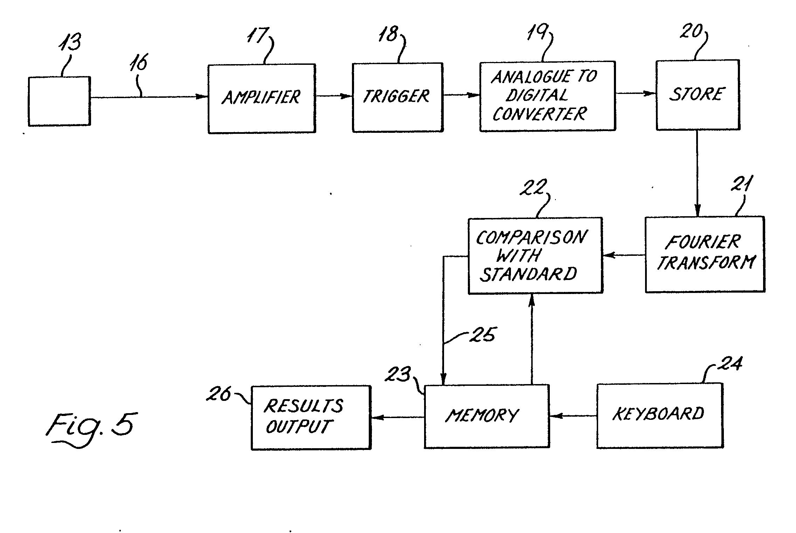

Figures 1 and 2 show typical force-time histories resulting from impactor taps on de-bonded (Figure 1) and sound (Figure 2) areas of an adhesively-bonded structure. In each of these figures the x-axis represents time and the y-axis represents the force to which the hammer is subjected, compression being indicated as negative and tension as positive. It is assumed that the impactor has made impact with each structure with equal energy. As comparison between the two figures clearly shows, when making impact with the sound structure the impactor undergoes an impact of greater maximum amplitude but shorter duration than when striking the damaged, de-bonded area. It may also be noted that although those two comparisons between the graphical functions of Figures 1 and 2 may easily be made, the functions themselves are not clearly of similar shape and neither of them has the form of a smooth curve. Electronic analysis of the curves is therefore difficult. In contrast Figure 3 shows that if the frequency content of the force pulses is displayed, the difference between the impacts appears in a form more suitable for automatic comparison. In Figure 3 the y-axis represents frequency in kHz, and the solid line corresponds to the same impact as that of Figure 2 while the broken line corresponds to the same impact as that of Figure 1. The two frequency functions of Figure 3 may be derived from the force-time functions of Figures 2 and 1 in a manner that will be described with reference to Figure 5, but it may readily be seen from the broken-line function that when the impactor makes its impact with a damaged area it acquires a high proportion of energy at low frequencies but the energy content falls off rapidly with increasing frequency. As the solid line shows, however, when the impactor makes impact with a sound area it may acquire a relatively smaller proportion of its total energy at the lowest frequencies but the proportion decreases less rapidly as frequency rises. Three things particularly material to the invention are demonstrated by Figure 3. Firstly the pronounced difference in magnitude between the two functions as they approach the lowest illustrated frequency—that is to say, zero frequency—and the fact that they are both of substantial magnitude at that frequency value. These low-frequency differences between the impacts on sound and damaged areas help greatly towards achieving a clear indication of fit or lack of fit when test and reference spectra are compared automatically according to the present invention. Secondly the low upper frequency limit shown: while an upper limit as low as 4 kHz might actually be chosen for many applications, in practice some applications of the invention might benefit from a higher value, say up to 30 kHz. Thirdly it will be noted that the two functions shown in the solid and broken lines are both relatively smoothly curved and generally similar in shape, so that automatic comparison is relatively simple.

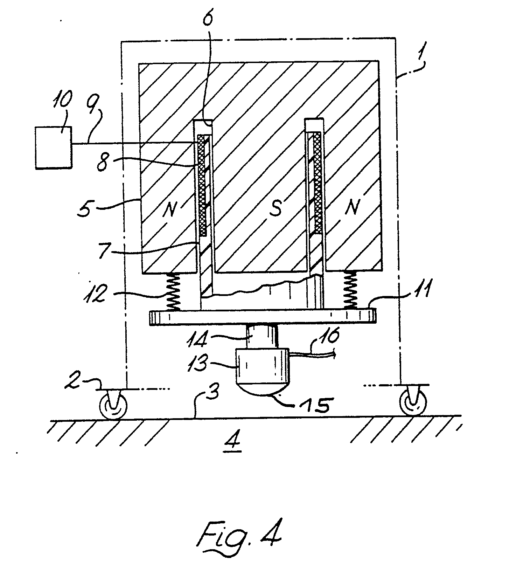

Figure 4 shows a suitable impactor including a casing 1 attached to a trolley 2 which rests upon the surface 3 of the structure 4 that is to be tested. The casing houses a permanent magnet 5 formed with a ring-sectioned recess 6 inside which a hollow cylindrical former 7 fits with clearance and can move axially. Former 7 is wound with a coil 8, connected by leads 9 to a voltage source 10. Former 7 is fixed to a circular plate 11, which is in turn connected to magnets by a spring 12 so that the spring suspends the coil 7 in the field of the magnet 5. A force transducer 13 (for example of the kind supplied as type 8200 by Bruel and Kjaer) is mounted on a central spigot 14 attached to plate 11, and an impactor head 15 is mounted on the opposite face of transducer 13. Spring 12 has sufficient lateral stiffness to allow the system to operate in any orientation without coil 8 contacting magnet 5, and a test is carried out by causing source 10 to apply a current pulse to the coil, causing former 7 and all attached parts including head 15 to move towards structure 4. After impact, the same parts are returned to their original position by the force of spring 12, aided if required by a reverse pulse in coil 8. There must be sufficient damping in the system to prevent multiple impact. The output of transducer 13 is a voltage proportional to the instantaneous force of reaction experienced by impactor head 15.

In block diagram form, Figure 5 shows the necessary electronic circuit components. The output signals from force transducer 13 pass by way of leads 16 and an amplifier 17 and trigger unit 18 to an analogue-to-digital converter 19 and thence to an associated store 20. Trigger unit 18, of a kind standard in known spectrum analysers, operates when the signal from amplifier 17 exceeds a certain level, but also ensures that the value of the output of amplifier 17, for several points prior to the moment of trigger, enters the store 20. The value of this facility is that the leading edge of the force pulse and therefore the information contained in this part of the force-time history is included in the frequency spectrum to be computed from that history.

When required, the output of store 20 is fed to a Fourier transform unit 21 where, because of the relatively short duration of the force pulse (as illustrated in Figures 1 and 2) a transform of only say thirty-two points may be needed to convert the output of store 20 into a digital frequency spectrum which may then be compared, in unit 22, with a reference frequency spectrum fed to unit 22 from a memory unit 23 into which it had itself been entered either by a test on a reference structure (which could itself have been a previous test structure) or by a keyboard 24 which may also be used to enter other instructions to set up the system. The result of the comparison is returned to memory 23 immediately by unit 26 and/or retained for subsequent use. Unit 26 may take various forms: for instance a red/green light, an alarm bell or a VDU display.

**Claims**

1. A method of testing a structure by the use of an impactor attached to a force transducer, in which the impactor is caused to make impact with the structure and the resulting output of the force transducer, representing the force to which the transducer is subjected by reason of the impact, constitutes the single input to a spectrum analyser to yield a test frequency spectrum of the output, characterised in that

the output of the force transducer is made to encompass a finite and continuous frequency range including the lowest frequencies which the force includes to any substantial degree;

the test frequency spectrum is made to cover the whole of the said frequency range and is in a form suitable for automatic comparison with a reference frequency spectrum of similar form indicative to the same impactor striking a reference structure;

such a reference frequency spectrum is generated and the test and reference frequency spectra are so compared automatically, and

a signal is produced indicative of a fit or lack of fit between the test and reference frequency spectra.

2. A method of testing according to Claim 1 characterised in that the lower end of the frequency range is chosen at substantially zero frequency.

3. A method of testing according to Claim 2 characterised in that the upper end of the frequency range is chosen at about 30 kHz.

4. A method of testing according to Claim 1 characterised in that the output of the force transducer is passed to the spectrum analyser not only during the duration of the impact but also for a short period afterwards.

5. A method of testing according to Claim 1 characterised in that the spectra are presented in a form in which force indicated on a logarithmic scale is plotted against frequency.

6. A method of testing according to Claim 1 characterised in that generation of the test frequency spectrum is triggered by the magnitude of the output from the force transducer exceeding a present value.

7. A method of testing according to Claim 1 characterised by a "pre-trigger facility", whereby the test frequency spectrum when generated includes information relating to a predetermined period occurring before the moment of triggering.

8. Apparatus for testing structures by impact comprising an impactor, a force transducer associated with the impactor and adapted when the impactor makes impact with the structure to produce an output related to the force to which the force transducer is subjected by reason of the impact, and a spectrum analyser to receive as its single input the output of the force transducer and produce a test frequency spectrum of that output, characterised in that

the force transducer is adapted to produce an output which encompasses a finite and continuous frequency range including the lowest frequencies which the force contains to any substantial degree;

there are means to produce a reference frequency spectrum indicative of the frequency spectrum of the impactor striking a reference structure, and

there are means to compare the test and reference frequency spectra automatically, and to produce a signal indicative of a fit or lack of fit between the test and reference frequency spectra.

9. Apparatus according to Claim 8, characterised in that the spectrum analyser comprises the combination of an analogue-to-digital converter and a digital Fourier transformer adapted to receive the output of that converter.

**Patentansprüche**

1. Verfahren zum Prüfen einer Struktur unter Verwendung eines an einem Kraftwandler befestigten Schlagorgans, wobei das Schlagorgan veranlaßt wird, auf die Struktur aufzuschlagen, und das sich ergebende Ausgangssignal des Kraftwandlers, das die aufgrund des Aufschlags auf den Wandler wirkende Kraft darstellt, das einzige Eingangssignal eines Spektralanalysators bildet, um ein Testfrequenzspektrum des Ausgangssignals zu ergeben, dadurch gekennzeichnet, daß

das Ausgangssignal des Kraftwandlers so gemacht wird, daß es einen begrenzten und kontinuierlichen Frequenzbereich einschließlich der niedrigsten Frequenzen umschließt, welche die Kraft in irgendeinem wesentlichen Ausmaß enthält,

das Testfrequenzspektrum so ausgelegt wird, daß es den gesamten genannten Frequenzbereich überdeckt und in einer für einen aromatischen Vergleich mit einem Bezugsfrequenzspektrum ähnlicher Form, welches das gleiche Schlagorgan beim Aufschlagen auf eine Bezugsstruktur darstellt, geeignet ist,

ein solches Bezugsfrequenzspektrum erzeugt wird und das Test- und das Bezugsfrequenzspektrum so automatisch miteinander verglichen werden, und

ein eine Übereinstimmung oder das Fehlen einer Übereinstimmung zwischen dem Test- und dem Bezugsfrequenzspektrum anzeigendes Signal erzeugt wird.

2. Testverfahren nach Anspruch 1, dadurch gekennzeichnet, daß das untere Ende des Frequenzbereiches etwa beim Frequenzwert Null gewählt wird.

3. Testverfahren nach Anspruch 2, dadurch gekennzeichnet, daß das obere Ende des Frequenzbereiches bei etwa 30 kHz gewählt wird.

4. Testverfharen nach Anspruch 1, dadurch gekennzeichnet, daß das Ausgangssignal des Kraftwandlers nicht nur während der Dauer des Aufschlags, sondern auch noch eine kurze Zeitspanne danach zum Spektralanalysator zugeführt wird.

5. Testverfahren nach Anspruch 1, dadurch gekennzeichnet, daß die Spektren in einer Form dargestellt werden, in welcher die Kraft auf einer logarithmischen Skala über der Frequenz aufgetragen ist.

6. Testverfahren nach Anspruch 1, dadurch gekennzeichnet, daß die Erzeugung des Testfrequenzspektrums dadurch ausgelöst wird, daß die Größe des Ausgangssignals des Kraftwandlers einen gegenwärtigen Wert übersteigt.

7. Testverfahren nach Anspruch 1, gekennzeichnet durch eine "Vorauslösemöglichkeit", derart, daß das Testfrequenzspektrum, wenn es erzeugt wird, eine Information bezüglich einer vorgegebenen Zeitspanne vor dem Augenblick der Auslösung enthält.

8. Gerät zum Testen von Strukturen durch Aufschlag, mit einem Schlagorgan, einem dem Schlagorgan zugeordneten Kraftwandler, der so ausgelegt ist, daß er, wenn das Schlagorgan auf die Struktur aufschlägt, ein auf die aufgrund des Aufschlags auf den Kraftwandler wirkende Kraft bezogenes Ausgangssignal erzeugt, und einem Spektralanalysator, des das Ausgangssignal des Kraftwandlers als einziges Eingangssignal empfängt und ein Testfrequenzspektrum dieses Ausgangssignals erzeugt, dadurch gekennzeichnet, daß

der Kraftwandler so ausgelegt ist, daß er ein Ausgangssignal erzeugt, welches einen begrenzten und kontinuierlichen Frequenzbereich umschließt, der die niedrigsten Frequenzen einschließt, welche die Kraft noch in irgendeinem wesentlichen Ausmaß enthält,

Mittel zur Erzeugung eines Bezugsfrequenzspektrums vorgesehen sind, welches das Frequenzspektrum des Schlagorgans beim Aufschlag auf eine Bezugsstruktur darstellt, und

Mittel zum automatischen Vergleich des Test- und des Bezugsfrequenzspektrums und zur Erzeugung eines Signals vorgesehen sind, das eine Übereinstimmung oder einen Mangel an Übereinstimmung zwischen dem Test und dem Bezugsfrequenzspektrum darstellt.

9. Gerät nach Anspruch 8, dadurch gekennzeichnet, daß der Spektralanalysator eine Kombination aus einem Analog-Digital-Umsetzer und einem zur Aufnahme des Ausgangssignals dieses Umsetzers ausgelegten digitalen Fourier-Transformator aufweist.

**Revendications**

1. Procédé d'épreuve d'une structure par utilisation d'un organe de choc fixé à un transducteur de force, dans lequel l'organe de choc est mis en condition de frappe de la structure et le signal résultant de sortie du transducteur de force, représentant la force à laquelle le transducteur est soumis sous l'action du choc, constitue le seul signal d'entrée d'un analyseur de spectres destiné à donner un spectre de fréquences d'épreuve du signal de sortie, caractérisé en ce que

le signal de sortie du transducteur de force recouvre une plage finie et continue de fréquences contenant les plus faibles fréquences que la force contient à un degré notable,

le spectre de fréquences d'épreuve recouvre la totalité de la plage de fréquences et est sous une forme qui convient à une comparaison automatique avec un spectre de fréquences de référence de forme analogue représentatif de la frappe d'une structure de référence par le même organe de choc,

un tel spectre de fréquences de référence est crée et les spectres de fréquences d'épreuve de référence sont ainsi comparés automatiquement, et

un signal représentatif d'un accord ou d'un désaccord entre les spectres d'épreuve et de référence est formé.

2. Procédé d'épreuve selon la revendication 1, caractérisé en ce que l'extrémité inférieure de la plage des fréquences est choisie de manière qu'elle corresponde à la fréquence nulle pratiquement.

3. Procédé d'épreuve selon la revendication 2, caractérisé en ce que l'extrémité supérieure de la plage de fréquences est choisie à 30 kHz environ.

4. Procédé d'épreuve selon la revendication 1, caractérisé en ce que le signal de sortie du transducteur de force est transmis à l'analyseur de spectres non seulement pendant la durée du choc mais aussi pendant une courte période ultérieurement.

5. Procédé d'épreuve selon la revendication 1, caractérisé en ce que les spectres sont présentés sous une forme dans laquelle une force indiquée sur une échelle logarithmique est portée en fonction de la fréquence.

6. Procédé d'épreuve selon la revendication 1, caractérisé en ce que la création du spectre de fréquences d'épreuve est déclenchée lorsque l'amplitude du signal de sortie du transducteur de force dépasse une valeur actuelle.

7. Procédé d'épreuve selon la revendication 1, caractérisé par une "disposition préalable au déclenchement" telle que le spectre de fréquences d'épreuve, lorsqu'il est créé contient des informations relatives à une période prédéterminée antérieure au moment du déclenchement.

8. Appareil d'épreuve par choc pour structures, comprenant un organe de choc, un transducteur de force associé à l'organe de choc et destiné, lorsque l'organe de choc vient frapper la structure, à former un signal de sortie qui dépend de la force à laquelle le transducteur de force est soumis à cause de choc, et un analyseur de spectres destiné à recevoir, comme seul signal d'entrée, le signal de sortie du transducteur de force et à former un spectre de fréquences d'épreuve de ce signal de sortie, caractérisé en ce que

le transducteur de force est destiné à former un signal de sortie qui recouvre une plage finie et continue de fréquences contenant les plus faibles fréquences que contient la force à un degré notable,

un dispositif est destiné à donner un spectre de fréquences de référence représentatif du spectre de fréquences de l'organe de choc lorsqu'il frappe une structure de référence, et

un dispositif est destiné à comparer les spectres de fréquences d'épreuve et de référence automatiquement et à former un signal représentatif de l'accord ou du désaccord entre les spectres de fréquences d'épreuve et de référence.

9. Appareil selon la revendication 8, caractérisé en ce que l'analyseur de spectres comprend la combinaison d'un convertisseur analogique-numérique et d'un circuit numérique de transformation de Fourier destiné à recevoir le signal de sortie de ce convertisseur.

TENSION

FORCE ──────────────────────── TIME

COMPRESSION

*Fig. 1*

TENSION

FORCE ──────────────────────── TIME

COMPRESSION

*Fig. 2*

FORCE (LOG SCALE)

SOUND AREA

DAMAGED AREA

0          2          4

FREQUENCY (kHz)

*Fig. 3*

1

Fig. 4

**Fig. 5**

13 — 16 — AMPLIFIER (17) → TRIGGER (18) → ANALOGUE TO DIGITAL CONVERTER (19) → STORE (20)

STORE (20) → FOURIER TRANSFORM (21) → COMPARISON WITH STANDARD (22)

COMPARISON WITH STANDARD (22) — 25 → MEMORY (23); MEMORY (23) → COMPARISON WITH STANDARD

RESULTS OUTPUT (26) ← MEMORY (23) ← KEYBOARD (24)

0 121 395